# EUROPÄISCHE PATENTSCHRIFT

(11) **EP 4 260 410 B1**
(45) Veröffentlichungstag und Bekanntmachung des Hinweises auf die Patenterteilung: **24.09.2025**
(21) Anmeldenummer: 21844183.0
(22) Anmeldetag: 06.12.2021
(51) Int. Cl.: H01R 13/04, H01R 13/187, H01M 10/42, H01R 13/642, H01R 13/627, H01R 101/00

(54) **HOCHSTROMSTECKVERBINDER, PATCHKABEL UND STECKVERBINDERSYSTEM FÜR EIN AKKUPACK**
HIGH-CURRENT PLUG-IN CONNECTOR, PATCH CABLE AND PLUG-IN CONNECTOR SYSTEM FOR A RECHARGEABLE BATTERY PACK
CONNECTEUR ENFICHABLE POUR COURANTS FORTS, CÂBLE DE RACCORDEMENT ET SYSTÈME DE CONNECTEUR ENFICHABLE POUR BLOC D'ACCUMULATEUR

(30) Priorität: 10.12.2020 DE 102020132965
(43) Veröffentlichungstag der Anmeldung: 18.10.2023
(73) Patentinhaber: HARTING Electric Stiftung & Co. KG, 32339 Espelkamp (DE)
(72) Erfinder: GRIEPENSTROH, Sebastian, 32339 Espelkamp (DE)
(86) Internationale Anmeldenummer: PCT/DE2021/100973
(87) Internationale Veröffentlichungsnummer: WO 2022/122079

(56) Entgegenhaltungen:
- CN-A- 107 809 022
- CN-A- 111 430 967
- CN-U- 202 308 438
- DE-A1- 19 718 448

## Beschreibung

Die Erfindung geht aus von einem Steckverbindersystem, aufweisend zwei Hochstromsteckverbinder, für ein Akkupack nach der Gattung des unabhängigen Anspruchs 1. Unter einem "Akkupack" ist dabei ein Paket wieder aufladbarer Batterien zu verstehen, die üblicherweise in einem Rack, einem Regal und oder einem Schaltschrank angeordnet sind.

Derartige Hochstromsteckverbinder werden benötigt, um mehrere wieder aufladbare Batterien ("Akkus") miteinander in Reihen- und/oder Parallelschaltung zu einem konfigurierbaren Paket ("Akkupack") zu verbinden.

### Stand der Technik

Im Stand der Technik sind Batteriesäulen, Akkuschränke und Akkuracks bekannt, in denen mehrere Akkus mittels mehrerer Patchkabel zueinander parallel und/oder in Reihe geschaltet sind, um ihre Stromstärke und Ausgangsspannung jeweiligen Anforderungen anzupassen.

Die Druckschriften DE 10 2015 105 482 B4 und US 2018/0358789 A1 beschreiben den grundsätzlichen Aufbau eines solchen Schaltschranks oder Racks.

Die Druckschrift EP 2 176 901 B1 zeigt einen Akkumulator für handgeführte, elektromechanische Werkzeuge, mit einer Mehrzahl von Akkuzellen, die mittels mehrerer elektrischer Zellverbinder elektrisch fest miteinander verbunden sind.

Die Druckschrift DE 10 2016 124 501 A1 offenbart ein Batterie-Management-System für ein konfigurierbares Akkupack.

Die Druckschrift DE 197 18 448 A1 offenbart einen elektrischen Steckverbinder. Dieser nimmt in einer zylindrischen Kammer eines Buchsenteils ein zylindrisches Stiftteil auf. In einer ringförmigen Nut im Kontaktierungsbereich zwischen Stiftteil und Buchsenteil ist ein ringförmiges federndes Kontaktelement angeordnet. Das ringförmig federnde Kontaktelement federt in radialer Richtung in der ringförmigen Nut und bietet im Wesentlichen gleichmäßig verteilt auf dem gesamten inneren und äußeren Umfang des Kontaktelementes Punkte zur Kontaktierung des Stiftteils und des Buchsenteils an. Mit dem ringförmigen federnden Kontaktelement werden große Unterschiede zwischen dem Innendurchmesser des Buchsenteils und dem Außendurchmesser des Stiftteils ausgeglichen, der damit zusammenhängende Versatz der Mittelachsen aufgefangen und eine gute Steckverbindung bei gleichbleibender Kontaktnormalkraft erreicht.

Die Druckschrift CN 107809022 A offenbart einen explosionsgeschützten Niederspannungs-Verdrahtungsanschluss vom Kontaktfingertyp, der einen elektrischen Leiter und einen außerhalb des elektrischen Leiters eingebetteten Isolator umfasst. An einem Ende des elektrischen Leiters ist eine Buchse angeordnet. An einer Innenwand der Buchse ist ein elastisches leitendes Stück angeordnet. Gemäß dem durch die Erfindung bereitgestellten technischen Schema sind drei Eingangsklemmen und drei Ausgangsklemmen einer Hauptschleifen-Dreiphasenstromversorgung über die Kontaktfinger-Niederspannungs-Explosionsschutz-Verdrahtungsklemmen in konvex-konkaver Weise verbunden, so dass zwölf Schrauben und sechs Kabel oder flexible Kupferverbindungen eingespart werden. Ein an den Verbindungspunkt angepasster Gleichstromwiderstand wird reduziert, die Belastbarkeit elektrischer Geräte wird verbessert, der Sicherheitsfaktor wird erhöht, die Materialkosten und der Platz werden reduziert und die Kontaktfingerart wird verringert Die explosionsgeschützte Verdrahtungsklemme eignet sich für den Einsatz durch die Kombination mit modularen und digitalisierten Elektrogeräten.

Die Druckschrift CN 111430967 A offenbart einen elektrischen Steckverbinder, der eine elektrische Anschlussbuchse und einen elektrischen Anschlusskontaktstift umfasst. Die elektrische Anschlussbuchse umfasst mindestens eine elektrisch leitfähige Basis, und eine Anlagefeder. Die Basis ist mit einer Stecknut versehen, und die Anlagefeder ist mit der Nutseitenwand der Stecknut verbunden. Die Anlagefeder ist elastisch und elektrisch leitfähig. Der elektrische Anschlusskontaktstift umfasst zumindest einen elektrisch leitenden Kontaktstift, der nach außen ragt und passend in die Stecknut einführbar ist, wobei die Anlagefeder den Kontaktstift elektrisch leiten kann und nach dem Kontaktstift die leitende Basis angeordnet ist in die Stecknut gesteckt. Erfindungsgemäß wird durch die Anordnung der leitfähigen und elastischen Anlagefeder in der Stecknut erreicht, dass sich die Anlagefeder beim Einstecken des Kontaktstiftes in die Stecknut elastisch verformt und sich an die Außenwand des Kontaktstiftes anschmiegt. Dadurch ist der Kontaktstift in die Lage versetzt fest mit der leitenden Basis verbunden zu werden, um ein Lösen, einen schlechten Kontakt und die Beseitigung potenzieller Sicherheitsrisiken zu verhindern.

Im Stand der Technik werden an die Leistungsfähigkeit solcher Systeme immer höhere Anforderungen gestellt, d. h. es sollen immer höhere Stromstärken bei zumindest gleicher Spannung übertragen werden. Gleichzeitig soll der Platzbedarf sich nicht wesentlich vergrößern, d. h. die Bauform bestehender Akkuschränke/ Akkuracks soll sich möglichst nicht ändern.

Die Druckschrift CN 202308438 U offenbart dazu eine Federring-Buchse und einen dazu passenden Kontaktstift. An den Innenwänden der Kontaktstiftlöcher sind ringförmige Schlitze mit U-förmigem Querschnitt angeordnet. In den Ringschlitzen sind Spiralfederringe angeordnet. Der Innendurchmesser jedes Spiralfederrings ist kleiner als der jedes Kontaktstiftlochs. Die Höhe des Spiralfederrings stimmt mit der Breite des Ringschlitzes überein. Der Spiralfederring wird von einer der Spiralfedern gebildet, die als Schrägfeder ausgebildet ist. Der Kontaktstift besitzt einen Kontaktstiftkopf. Auf dem Kontaktstiftkopf sind Lichtbogenschlitze derart angeordnet, dass sie eine Umfangsfläche des Kontaktstiftkopfes umgeben. Der Kontaktstiftkopf passt mit einer Buchse zusammen. Die Lichtbogenfedern sind in Anzahl und Position auf ringförmige Schlitze in den Kontaktstiftlöchern abgestimmt. Dadurch wird eine hohe Stromtragfähigkeit mit einer kompakten Bauform verbunden, indem einerseits die Vorteile einer großen Kontaktfläche mit der eines geringen Volumens verbunden werden. Zudem ist die Buchse vergleichsweise einfach aus gängigen Komponenten aufgebaut.

Weiterhin besteht im Stand der Technik die Notwendigkeit, zu vermeiden, dass Patchkabel, die eine zu geringe Stromtragfähigkeit besitzen, für künftige, leistungsfähigere Systeme eingesetzt werden.

Das Deutsche Patent- und Markenamt hat in der Prioritätsanmeldung zu vorliegender Anmeldung den folgenden Stand der Technik recherchiert: DE 10 2015 105 482 B4, DE 196 24 662 A1, DE 10 2011 089 978 A1, US 2018/0358789 A1 und EP 2 176 901 B1.

### Aufgabenstellung

Die Aufgabe der Erfindung besteht darin, einen Hochstromsteckverbinder anzugeben, der eine intuitive und abwärtskompatible Kodierung zur Kennzeichnung seiner Stromtragfähigkeit besitzt. Insbesondere soll die abwärtskompatible Kodierung ein Stecken mit Gegensteckverbindern höherer Stromtragfähigkeit vermeiden und ein Stecken mit Gegensteckverbindern gleicher oder geringerer Stromtragfähigkeit ermöglichen.

Die Aufgabe wird durch den Gegenstand des unabhängigen Anspruchs 1 gelöst.

Ein Steckverbindersystem weist einen ersten und einen zweiten Hochstromsteckverbinder auf. Jeder der beiden Hochstromsteckverbinder besitzt ein Steckverbindergehäuse und einen darin angeordneten Buchsenkontakt. Der Buchsenkontakt besitzt einen Steckbereich mit einer Kontaktbohrung. Beide Hochstromsteckverbinder besitzen eine Kodierung zur Kennzeichnung ihrer jeweiligen maximalen Stromtragfähigkeit.

Der Buchsenkontakt des ersten Hochstromsteckverbinders besitzt eine Kontaktbohrung und an der Kontaktbohrung zwei Nuten mit jeweils einer darin angeordneten oder zumindest darin eingreifenden Kontaktfeder. Der Buchsenkontakt des zweiten Hochstromsteckverbinders besitzt eine Kontaktbohrung und an der Kontaktbohrung eine Nut mit einer darin angeordneten oder zumindest darin eingreifenden Kontaktfeder.

Die Anzahl der Kontaktfedern bestimmt die Stromtragfähigkeit des Hochstromsteckverbinders. Die Kopierung ist durch die Tiefe der Kontaktbohrung gebildet.

Außerdem besitzt das Steckverbindersystem einen ersten Gegensteckverbinder, der ein Gegensteckverbindergehäuse und einen Stiftkontakt mit einem Kontaktstift besitzt. Das Gegensteckverbindergehäuse besitzt eine Verriegelungsvorrichtung und einen Steckabschnitt, in den der Kontaktstift hineinragt.

Der erste Hochstromsteckverbinder besitzt eine höhere Stromtragfähigkeit als der zweite Hochstromsteckverbinder. Die Kontaktbohrung des ersten Hochstromsteckverbinders ist tiefer als die des zweiten Hochstromsteckverbinders.

Der erste Hochstromsteckverbinder ist mit dem ersten Gegensteckverbinder steck- und verriegelbar. Der zweite Hochstromsteckverbinder ist jedoch mit dem ersten Gegensteckverbinder aufgrund der geringeren Tiefe seiner Kontaktbohrung nicht vollständig steckbar und dadurch nicht verriegelbar.

Insbesondere kann die Stromtragfähigkeit des ersten Hochstromsteckverbinders der Stromtragfähigkeit des ersten Gegensteckverbinders zumindest entsprechen. Mit anderen Worten kann die Stromtragfähigkeit des ersten Hochstromsteckverbinders mindestens so groß sein, wie die Stromtragfähigkeit des ersten Gegensteckverbinders.

Dabei und im Folgenden kennzeichnet der Begriff "Stromtragfähigkeit" die maximale zulässige, über den Hochstromsteckverbinder bzw. den Gegensteckverbinder übertragbare Stromstärke.

Der Steckbereich des Buchsenkontakts des Hochstromsteckverbinders kann eine im Wesentlichen hohlzylindrische Grundform aufweisen, wobei der zylinderförmige Hohlraum des Hohlzylinders, der im Fachjargon sowie hier und im Folgenden als "Kontaktbohrung" bezeichnet wird, für alle Hochstromsteckverbinder des Steckverbindersystems den gleichen Innendurchmesser besitzt.

Vorteilhafte Ausgestaltungen der Erfindung sind in den Unteransprüchen und der folgenden Beschreibung angegeben.

Ein besonderer Vorteil der Erfindung besteht darin, dass der Hochstromsteckverbinder zur Übertragung von Stromstärken von mehr als 200 A ("Ampere"), insbesondere mehr als 250 A, bevorzugt mehr als 300 A, besonders bevorzugt mehr als 350 A also beispielsweise sogar 400 und idealerweise sogar mehr, insbesondere bei Spannungen von mehr als 1000 V ("Volt"), beispielsweise bei 1500 V, in der Lage ist.

Ein besonderer Vorteil der Erfindung besteht weiterhin darin, dass der Hochstromsteckverbinder zu bestehenden Batterie-/ Akkusystemen abwärtskompatibel ist, d. h. er ist mit Systemen, die für geringere Stromstärken, beispielsweise nur bis zu 200 A ausgelegt sind, steckbar.

Ein weiterer Vorteil der Erfindung besteht darin, dass der Hochstromsteckverbinder durch seinen Buchsenkontakt mit Gegensteckverbindern im gesteckten Zustand nur dann verrastet und/oder verriegelt werden kann, wenn der Gegensteckverbinder für gleiche oder für geringere Stromstärken als der besagte Hochstromsteckverbinder ausgelegt ist. Dazu kann der Gegensteckverbinder eine Verriegelungsvorrichtung, insbesondere einen Verriegelungshebel mit einem Verriegelungsabschnitt, aufweisen, die nur bei ausreichend tiefem Einstecken des Kontaktstifts des Gegensteckverbinders in die Kontaktbohrung des Hochstsromsteckverbinders mit einem Rastelement, insbesondere einem Raststeg des Steckverbindergehäuses, in Eingriff kommt. In einer anderen Variante kann auch das Steckverbindergehäuse des Hochstromsteckverbinders eine Verriegelungsvorrichtung und das Gegensteckverbindergehäuse ein Gegenrastelement aufweisen.

Umgekehrt ist es durch die Steckkontakte und ihre Anordnung im jeweiligen Steckverbindergehäuse/ Gegensteckverbindergehäuse verhindert, dass Hochstromsteckverbinder mit Gegensteckverbindern gesteckt und verriegelt/ verrastet werden, wenn die Hochstromsteckverbinder für nur geringere Stromstärken ausgelegt sind als die Gegensteckverbinder.

Insbesondere wird dies dadurch erreicht, dass die maximale Einstecktiefe der stromtragfähigeren Hochstromsteckverbinder größer ist als die der weniger stromtragfähigen Hochstromsteckverbinder. Dies stellt eine besonders vorteilhafte und intuitive Kodierung dar.

Gleichzeitig wird durch die erhöhte Einstecktiefe der für höhere Stromstärken ausgelegten Hochstromsteckverbinder auch ermöglicht, den Kontaktbereich zu vergrößern, d. h. eine größere Kontaktfläche zu schaffen, über welche somit auch höhere Stromstärken übertragen werden können. Dazu sind in der innenseitigen Kontaktfläche der Kontaktbuchse des Hochstromsteckverbinders mehrere Kontaktfedern in Form innenseitig umlaufender Spiralfedern je in Eingriff mit einer umlaufenden Nut angeordnet.

Allgemein formuliert können stromtragfähigere Hochstromsteckverbinder mehr Kontaktfedern aufweisen als weniger stromtragfähige Hochstromsteckverbinder. Beispielsweise kann ein erster Hochstromsteckverbinder, der für höhere Stromstärken ausgelegt ist als ein zweiter Hochstromsteckverbinder, zwei Kontaktfedern aufweisen, während der zweite Hochstromsteckverbinder nur eine Kontaktfeder aufweist.

Insbesondere ist die Stromtragfähigkeit des ersten Hochstromsteckverbinders dann doppelt so hoch wie die Stromtragfähigkeit des zweiten Hochstromsteckverbinders.

Von besonderem Vorteil ist somit, dass die für verschiedene Stromstärken ausgelegten Hochstromsteckverbinder, also z. B. der erste Hochstromsteckverbinder und der zweite Hochstromsteckverbinder, sich durch die Tiefe der Kontaktbohrung ihrer Kontaktbuchsen sowie durch die Anzahl ihrer Kontaktfedern unterscheiden. Es lassen sich daher für den ersten und den zweiten Hochstromsteckverbinder die gleichen Gehäuse verwenden. Auch unterscheiden sich ihre Buchsenkontakte lediglich durch die Tiefe ihrer Kontaktbohrung und der Zahl der darin angeordneten umlaufenden Nuten, in welche die Kontaktfedern eingreifen.

Bei den Kontaktfedern kann es sich bevorzugt um Spiralfederringe handeln.

In einem Zahlenbeispiel lässt sich ein Stecksystem in Verbindung mit der besagten Kodierung folgendermaßen erklären:
Pro Kontaktfeder kann beispielsweise ein Strom von bis zu 200 A übertragen werden.

Weiterhin besitzen die Kontaktbohrungen derjenigen Hochstromsteckverbinder, die für höhere Stromstärken ausgelegt sind, eine größere Tiefe als diejenigen Hochstromsteckverbinder, die für geringere Stromstärken ausgelegt sind.

Außerdem besitzen die Buchsenkontakte derjenigen Hochstromsteckerbinder, die für höhere Stromstärken ausgelegt sind, mehr Kontaktfedern als diejenigen Hochstromsteckverbinder, deren Stromtragfähigkeit geringer ist.

Die Buchsenkontakte der Hochstromsteckverbinder können also umso mehr Strom übertragen, je mehr Kontaktfedern sie aufweisen, beispielsweise bis zu 600 A mit drei Kontaktfedern, bis zu 400 A mit zwei Kontaktfedern oder 200 A mit nur einer Kontaktfeder.

Je tiefer die Kontaktbohrung des jeweiligen Steckbereichs ist, desto mehr Kontaktfedern können darin angeordnet sein. Gleichzeitig findet durch die Tiefe der jeweiligen Kontaktbohrung eine abwärtskompatible Kodierung gegenüber einem oder mehreren Gegensteckverbindern statt.

Die Gegensteckverbinder sind insbesondere dadurch kodiert, dass die Kontaktstifte der Stiftkontakte für höhere zu übertragende Stomstärken tiefer in den Steckbereich ihres Gegensteckverbindergehäuses hineinragen, als für geringere Stromstärken. Die damit zu steckenden Hochstromsteckverbinder sind durch die Tiefe der Kontaktbohrung ihrer Kontaktbuchse kodiert.

Die jeweiligen Gegensteckverbinder sind für die Funktion des Akkus und/oder Batteriemenegementsystems, an das sie angebaut sind, geeignet, denn diese Zuordnung wird bei der Montage des Akkuracks/ Akkuschranks/ Schaltschranks oder dergleichen vorgenommen. Auch sind ausreichend stromtragfähige Hochstromkabel zur Herstellung der Patchkabel an entsprechend leistungsfähige Hochstromsteckverbinder angeschlossen.

Bei der vorgenannten Kodierung geht es jedoch vor allem darum, bei der Anwendung ("Verpatchung") eine Fehlbedienung zu vermeiden. Es soll nämlich vermieden werden, dass zumindest einige nicht ausreichend leistungsfähige Patchkabel mit ihren Hochstromsteckern derart an das Batteriesystem anschliebar sind, dass sie mit zu hohen Stromstärken belastet werden. Dies stellt schließlich bei der Erweiterung von Batteriesystemen in den Bereich höherer Stromstärken eine wesentliche Gefahr dar, insbesondere auch wegen der bereits im Markt existierenden, weniger leistungsfähigen Patchkabel.

Dabei können sich die Stromstärken nicht nur aus der Stromtragfähigkeit des Gegensteckverbinders, sondern zusätzlich auch aus der jeweiligen Anwendung und dem Aufbau des Batteriesystems.

Insbesondere ergeben sich die Stromstärken, die - umgekehrt formuliert - ein geeignetes Patchkabel verkraften können soll je nach dem jeweiligen Aufbau des Batteriesystems daraus, wieviel Strom das gesamte Akkupack, einzelne seiner Akkus und/oder das Batteriemanagementsystem über die einzelnen, daran jeweils angebauten Gegensteckverbinder liefern und/oder empfangen kann.

Dementsprechend kann der geeignet kodierte (und dabei auch selbst ausreichend stromtragfähige) Gegensteckverbinder bei der Konstruktion ausgewählt und angebaut werden, wodurch die die damit steckbaren Hochstromsteckverbinder und die damit ausgestatteten Patchkabel mittels der vorgenannten Kodierung festgelegt werden.

Alternativ oder ergänzend ist es auch denkbar, einen Gegensteckverbinder bezüglich seiner Kodierung modifizierbar zu gestalten. Ein solch modifizierbarer Gegensteckverbinder könnte beispielsweise derart montierbar und/oder einstellbar sein, dass sein Kontaktstift entsprechend der gewünschten Stromstärke ausreichend tief in seinen Steckbereich hineinragt. Dazu könnten beispielsweise im Gegensteckverbindergehäuse durch dessen Innenkontur zwei verschiedene Einbaupositionen für den Stiftkontakt vorhanden sein. Es könnte alternativ auch ein Mechanismus, z. B. ein Schraubmechanismus, vorgesehen sein, durch den diese Tiefe des besagten Hineinragens des Kontaktstifts in den Steckbereich einstellbar ist.

Der/ die Gegensteckverbinder besitzt/ besitzen bevorzugt Anbaugehäuse und ist/sind als Einbaustecker zum Anschluss und Anbau an die besagten Akkus vorgesehen. Die Akkus "bestimmen" im Batteriesystem also die benötigten und gelieferten Stromstärken. Vorteilhafterweise können die Akkus und/oder das Batteriemanangementsystem diese Anforderungen über die ihnen angebauten Gegensteckverbinder kodieren, so dass nur Hochstromsteckverbinder ausreichend stromtragfähiger Patchkabel mit den jeweiligen Gegensteckern des Batteriesystems, insbesondere der Akkus und/oder des Batteriemanagementsystems, steck- und verriegelbar sind.

### Ausführungsbeispiel

Ein Ausführungsbeispiel der Erfindung ist in den Zeichnungen dargestellt und wird im Folgenden näher erläutert. Es zeigen:
- Fig. 1: einen ersten Hochstromsteckverbinder mit einem Gegensteckverbinder im gesteckten und verriegelten Zustand;
- Fig. 2: einen zweiten Hochstromsteckverbinder mit dem Gegensteckverbinder im nur teilweise gesteckten und unverriegelbaren Zustand.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein.

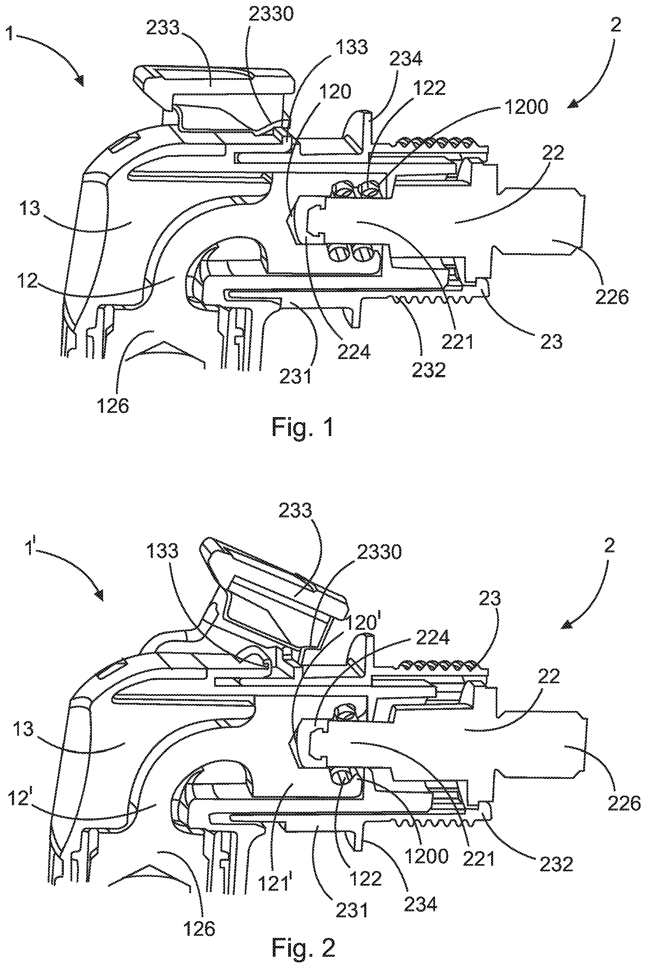

Die Fig. 1 zeigt einen ersten Hochstromsteckverbinder 1 mit einem gewinkelten Buchsenkontakt 12, der in einem gewinkelten Steckverbindergehäuse 13 angeordnet ist. Der Buchsenkontakt 12 besitzt einen Steckbereich 121 und einen Kabelanschlussbereich 126, wobei der Steckbereich 121 als Kontaktbuchse ausgeführt ist und eine im Wesentlichen hohlzylindrische Form besitzt, also einen im Wesentlichen zylinderförmigen Hohlraum 120, nämlich eine sogenannte "Kontaktbohrung", aufweist.

An dem zylinderförmigen Hohlraum 120 sind zwei umlaufende Nuten 1200 angeordnet, z. B. eingefräst.

In jede dieser diese Nuten 1200 greift je eine ringförmige Spiralfeder als Kontaktfeder 122 ein. Im nichtgesteckten Zustand ragen die Kontaktfedern in den zylinderförmigen Hohlraum hinein. Jede dieser Kontaktfedern 122 kontaktiert im dargestellten, gesteckten Zustand elektrisch sehr gut leitend mit einem Kontaktstift 221 eines Stiftkontakts 22 eines eingesteckten Gegensteckverbinders 2. Jede der Kontaktfedern 122 kann Stromstärken von z. B. bis zu 200 A übertragen, so dass die gesamte Kontaktanordnung 12, 22 in diesem Zahlenbeispiel einen elektrischen Strom von bis zu 400 A übertragen kann. Der Gegensteckverbinder 2 ist in diesem Zahlenbeispiel ebenfalls dafür ausgelegt, Stromstärken von bis zu 400 A zu liefern oder zu empfangen.

Weiterhin besitzt der Gegensteckverbinder 2 ein Gegensteckverbindergehäuse 23 mit einer Verriegelungsvorrichtung. Die Verriegelungsvorrichtung weist einen Verriegelungshebel 233 mit einem Verriegelungsabschnitt 2330 auf, welcher einen Verriegelungssteg 133 des Steckverbindergehäuses 13 verriegelnd hintergreift. Das Gegensteckverbindergehäuse 23 besitzt weiterhin kabelanschlussseitig eine rechts in der Zeichnung dargestellte Kontaktaufnahme 232 sowie einen daran anschließenden Anbauflansch 234 und steckseitig (in der Zeichnung links) des Anbauflanschs 234 einen Steckabschnitt 231 in welchen der Kontaktstift 221 des Stiftkontakts 22 hineinragt.

Der erste Hochstromsteckverbinder 1 ist durch den Verriegelungshebel 233 des Gegensteckverbinders 2 mit diesem 2 verriegelt, denn der Verriegelungshebel 233 greift mit seinem Verriegelungsabschnitt 2330 hinter einen Verriegelungssteg 133 des Steckverbindergehäuses 13.

Die Fig. 2 zeigt eine Anordnung, die sich davon dadurch unterscheidet, dass statt dem ersten Hochstromsteckverbinder 1 ein zweiter Hochstromsteckverbinder 1' mit dem Gegensteckverbinder 2 nur teilweise gesteckt und daher nicht verriegelt und auch nicht verriegelbar mit diesem 2 ist.

Der zweite Hochstromsteckverbinder 1' unterscheidet sich von dem ersten Hochstromsteckverbinder 1 durch seinen zweiten Buchsenkontakt 12', dessen zylinderförmiger Hohlraum 120' lediglich eine Nut 1200 mit einer darin angeordneten Kontaktfeder 122 aufweist, so dass der zweite Hochstromsteckverbinder 1' im Zahlenbeispiel nur bis zu 200 A übertragen kann. Sein Hohlraum 120' besitzt weiterhin zwar den gleichen Durchmesser, aber eine geringere Tiefe als der Hohlraum 120 des ersten Buchsenkontaks 12 des ersten Hochstromsteckverbinders 1. Dadurch ist der zweite Hochstromsteckverbinder 1' gegen Fehlsteckungen mit dem ihm gegenüber stromtragfähigeren Gegensteckverbinder 2 wirkungsvoll kodiert.

An dem Hohlraum 120' des zweiten Steckkontakts 1 ist nur eine Nut 1200 mit einer darin angeordneten Kontaktfeder 122 angeordnet, so dass der zweite Hochstromsteckverbinder 1' im vorgenannten Zahlenbeispiel nur bis zu 200 A übertragen kann.

Der als Kontaktstift 221 ausgeführte Steckbereich des Stiftkontakts 22 des Gegensteckverbinders 2 kann daher nicht so tief in den Hohlraum 120' des zweiten Hochstromsteckbinders 1' eintauchen, wie es bei dem ersten Hochstromsteckverbinder 1 aus der vorangegangenen Darstellung (gezeigt in der Fig. 1) der Fall ist. Stattdessen schlägt der Gegensteckverbinder 2 mit seinem am Steckbereich 221 aufgesteckten Berührschutz 224 bereits an Ende des Hohlraums 120' des zweiten Hochstromsteckverbinders 1' an, bevor der Verriegelungshebel 233 den Verriegelungssteg 133 mit seinem Verriegelungsabschnitt 2330 übergreifen kann.

Dadurch können auch die beiden Gehäuse 13, 23 nicht so tief miteinander gesteckt und verriegelt werden, wie es in der vorangegangenen Fig. 1 der Fall war. Der Verriegelungshebel 233 des Gegensteckverbinders 2 ist an dem Steckverbindergehäuse 13 des zweiten Hochstromsteckverbinders 1' dadurch nicht schließbar, was einem Anwender bei der händischen Benutzung intuitiv signalisiert, dass der zweite Hochstromsteckverbinder 1' nicht zum Gegensteckverbinder 2 passt.

In einer zweiten, nicht in der Zeichnung dargestellten Ausführung kann ein zweiter Gegensteckverbinder im genannten Zahlenbeispiel nur für, d. h. bis zu Stromstärken von nur 200 A ausgelegt sein. Sein Kontaktstift 221 ragt dann steckseitig weniger weit in den Steckabschnitt 231 des zweiten Gegensteckverbindergehäuses 23 hinein. Dies kann dadurch erreicht werden, dass der Stiftkontakt 22 weiter in Richtung seines Kabelanschlussbereichs 226, d. h. in der Zeichnung weiter nach rechts, im Gegensteckverbindergehäuse 23 angeordnet ist. Dann sind sowohl der zweite Hochstromsteckverbinder 1' als auch der erste Hochstromsteckverbinder 1 mit ihm steck- und verriegelbar, wodurch, wie im Folgenden erläutert, eine sinnvolle Abwärtskompatibilität gegeben ist.

Im genannten Zahlenbeispiel besitzt ein Patchkabel, das für 400 A ausgelegt ist, zwei erste Hochstromsteckverbinder, die ebenfalls für 400 A ausgelegt sind.

Ein zweites Patchkabel, das für nur 200 A ausgelegt ist, besitzt zwei zweite Hochstromsteckverbinder 1', die ebenfalls für nur 200 A ausgelegt sind.

Ein Akkupack das mehrere wieder aufladbare Batterien ("Akkus") aufweist, welche insgesamt Stromstärken von bis zu 400 A zu liefern in der Lage sind, ist mit Gegensteckverbindern 2 ausgestattet, die ebenfalls für diese Stromstärken von 400 A ausgelegt sind.

Das Patchkabel, das für 400 A ausgelegt ist, ist mit diesen Gegensteckverbindern 2 steck- und verriegelbar.

Das zweite Patchkabel, das nur für 200 A ausgelegt ist, ist - im Gegensatz dazu - mit diesen Gegensteckverbindern 2 nicht korrekt steck- und verriegelbar und signalisiert dies dem Benutzer intuitiv.

Umgekehrt wäre das Patchkabel, welches für 400 A ausgelegt ist, an einem zweiten Akkupack, das nur für 200 A ausgelegt und dementsprechend mit zweiten Gegensteckverbindern ausgestattet ist, durchaus verwendbar, denn deren Kontaktstift 221 greift gegebenenfalls einfach nur weniger tief in die Kontaktbohrung 120 des ersten Hochstromsteckverbinders 1 ein.

Bei der Konstruktion fällt es in den Aufgabenbereich des fachkundigen Konstrukteurs, zu bedenken, dass innerhalb des Akkupacks auch mehrere Akkus über die besagten Patchkabel z. B. auch parallelgeschaltet werden können und sich dadurch die maximale Gesamtstromstärke, die gegebenenfalls über zumindest einige der Patchkabel fließen kann, erhöht. Dementsprechend muss von ihm eine geeignete Auswahl der jeweils verbauten Gegensteckverbinder 2 mit geeigneter Kodierung getroffen werden.

So ist mit geringfügigen Änderungen der Bauform zwischen dem ersten Hochstromsteckverbinder 1 und dem zweiten Hochstromsteckverbinder 1' eine leistungsfähige und intuitive, abwärtskompatible Kodierung des Akkupacks mit den Patchkabeln gewährleistet.

Auch wenn in den Figuren verschiedene Aspekte oder Merkmale der Erfindung jeweils in Kombination gezeigt sind, ist für den Fachmann - soweit nicht anders angegeben - ersichtlich, dass die dargestellten und diskutierten Kombinationen nicht die einzig möglichen sind. Insbesondere können einander entsprechende Einheiten oder Merkmalskomplexe aus unterschiedlichen Ausführungsbeispielen miteinander ausgetauscht werden.

### Bezugszeichenliste

- 1: Erster Hochstromsteckverbinder
- 1': zweiter Hochstromsteckverbinder
- 12: erster Buchsenkontakt
- 12': zweiter Buchsenkontakt
- 120: erster Hohlraum ("Kontaktbohrung")
- 120': zweiter Hohlraum ("zweite Kontaktbohung")
- 1200: Nut

- 121: erster Steckbereich (Kontaktbuchse)
- 121': zweiter Steckbereich (Kontaktbuchse)
- 122: Kontaktfeder
- 126: Kabelanschlussbereich
- 13: Steckverbindergehäuse
- 133: Verriegelungssteg

- 2: Gegensteckverbinder
- 22: Stiftkontakt
- 221: Steckbereich (Kontaktstift)
- 224: Berührschutz
- 226: Kabelanschluss
- 23: Gegensteckverbindergehäuse
- 231: Steckabschnitt
- 232: Kontaktaufnahme
- 233: Verriegelungshebel
- 234: Anbauflansch
- 2330: Verriegelungsabschnitt

## Patentansprüche

1. Steckverbindersystem, aufweisend zwei Hochstromsteckverbinder, nämlich einen ersten Hochstromsteckverbinder (1) und einen zweiten Hochstromsteckverbinder (1'), jeweils aufweisend ein Steckverbindergehäuse (13) und einen darin angeordneten Buchsenkontakt (12, 12'), der einen Steckbereich (121, 121') mit einer Kontaktbohrung (120) besitzt, wobei jeder Hochstromsteckverbinder (1) eine Kodierung zur Kennzeichnung seiner maximalen Stromtragfähigkeit besitzt,
wobei der Buchsenkontakt (12, 12') an der Kontaktbohrung (120) eine oder mehrere Nuten (1200) mit jeweils einer darin angeordneten oder zumindest darin eingreifenden Kontaktfeder (122) besitzt, wobei die Anzahl der Kontaktfedern (122) die Stromtragfähigkeit des Hochstromsteckverbinders (1) bestimmt, und die Kodierung durch die Tiefe der Kontaktbohrung (120) gebildet ist,
wobei der erste Hochstromsteckverbinder zwei Nuten (1200) und zwei Kontaktfedern (122) besitzt, und wobei der zweite Hochstromsteckverbinder (1') nur eine Nut (1200) und nur eine Kontaktfeder (122) besitzt, und weiterhin aufweisend einen ersten Gegensteckverbinder (2), der ein Gegensteckverbindergehäuse (23) und einen Stiftkontakt (22) mit einem Kontaktstift (221) besitzt, wobei das Gegensteckverbindergehäuse (23) eine Verriegelungsvorrichtung (233) und weiterhin einen Steckabschnitt (231) besitzt, in den der Kontaktstift (221) hineinragt, wobei der erste Hochstromsteckverbinder (1) eine höhere Stromtragfähigkeit besitzt als der zweite Hochstromsteckverbinder (1'), wobei die Kontaktbohrung (120) des ersten Hochstromsteckverbinders (1) tiefer ist als die (120') des zweiten Hochstromsteckverbinders (1'), und wobei der erste Hochstromsteckverbinder (1) mit dem ersten Gegensteckverbinder steck- und verriegelbar ist und wobei der zweite Hochstromsteckverbinder (1') mit dem ersten Gegensteckverbinder (2) aufgrund der geringeren Tiefe seiner Kontaktbohrung (120') nicht vollständig steckbar und dadurch nicht verriegelbar ist.

2. Steckverbindersystem gemäß Anspruch 1, wobei die Stromtragfähigkeit des ersten Gegensteckverbinders (2) der Stromtragfähigkeit des ersten Hochstromsteckverbinders (1) entspricht.

3. Steckverbindersystem gemäß einem der Ansprüche 1 bis 2, wobei das Steckverbindersystem zusätzlich einen zweiten Gegensteckverbinder mit einem zweiten Gegensteckverbindergehäuse besitzt, wobei der Kontaktstift (221) des zweiten Gegensteckverbinders weniger weit in den Steckabschnitt des zweiten Gegensteckverbindergehäuses hineinragt als es bei dem ersten Gegensteckverbinder (2) der Fall ist, wobei der zweite Gegensteckverbinder sowohl mit dem zweiten Hochstromsteckverbinder (1') als auch mit dem ersten Hochstromsteckverbinder (1) steck- und verriegelbar ist, wobei der Kontaktstift (221) des zweiten Gegensteckverbinders im mit dem ersten Hochstromsteckverbinder (1) gesteckten Zustand nur einen Teil der Kontaktbohrung (120) des ersten Hochstromsteckverbinders (120) ausfüllt.

4. Steckverbindersystem gemäß Anspruch 3, wobei die Stromtragfähigkeit des zweiten Gegensteckverbinders der Stromtragfähigkeit des zweiten Hochstromsteckverbinders (1') entspricht.

## Claims

1. Plug-in connector system, comprising two high-current plug-in connectors, namely a first high-current plug-in connector (1) and a second high-current plug-in connector (1'), each comprising a plug-in connector housing (13) and a socket contact (12, 12') that is arranged therein and has a plug-in area (121, 121') having a contact bore (120), wherein each high-current plug-in connector (1) has a coding for identifying its maximum current-carrying capacity,
wherein the socket contact (12, 12') has one or more grooves (1200) at the contact bore (120) and each groove has a contact spring (122) that is arranged therein or at least engages therein, wherein the number of contact springs (122) determines the current-carrying capacity of the high-current plug-in connector (1) and the coding is formed by the depth of the contact bore (120),
wherein the first high-current plug-in connector has two grooves (1200) and two contact springs (122), and wherein the second high-current plug-in connector (1') has only one groove (1200) and only one contact spring (122), and furthermore comprising a first mating plug-in connector (2) which has a mating plug-in connector housing (23) and a pin contact (22) having a contact pin (221), wherein the mating plug-in connector housing (23) has a locking device (233) and furthermore a plug-in portion (231) into which the contact pin (221) protrudes, wherein the first high-current plug-in connector (1) has a higher current-carrying capacity than the second high-current plug-in connector (1'), wherein the contact bore (120) of the first high-current plug-in connector (1) is deeper than that (120') of the second high-current plug-in connector (1') and wherein the first high-current plug-in connector (1) can be mated and locked with the first mating plug-in connector and wherein the second high-current plug-in connector (1') is not fully mateable with the first mating plug-in connector (2) due to the shallower depth of its contact bore (120') and thus cannot be locked.

2. Plug-in connector system according to Claim 1, wherein the current-carrying capacity of the first mating plug-in connector (2) corresponds to the current-carrying capacity of the first high-current plug-in connector (1).

3. Plug-in connector system according to either of Claims 1 and 2, wherein the plug-in connector system has in addition a second mating plug-in connector having a second mating plug-in connector housing, wherein the contact pin (221) of the second mating plug-in connector protrudes less into the plug-in portion of the second mating plug-in connector housing than is the case with the first mating plug-in connector (2), wherein the second mating plug-in connector is mateable and lockable both with the second high-current plug-in connector (1') and also with the first high current plug-in connector (1), wherein the contact pin (221) of the second mating plug-in connector in the state mated with the first high-current plug-in connector (1) fills only a part of the contact bore (120) of the first high-current plug-in connector (120).

4. Plug-in connector system according to Claim 3, wherein the current-carrying capacity of the second mating plug-in connector corresponds to the current-carrying capacity of the second high-current plug-in connector (1').

## Revendications

1. Système de connecteurs enfichables, comprenant deux connecteurs enfichables à courant fort, à savoir un premier connecteur enfichable à courant fort (1) et un deuxième connecteur enfichable à courant fort (1'), comportant chacun un boîtier de connecteur enfichable (13) et un contact femelle (12, 12') disposé dans celui-ci, qui possède une zone d'enfichage (121, 121') avec un alésage de contact (120), chaque connecteur enfichable à courant fort (1) possédant un codage pour l'identification de sa capacité de transport de courant maximale,
le contact femelle (12, 12') au niveau de l'alésage de contact (120) possédant une ou plusieurs rainures (1200) dans chacune desquelles est disposé ou au moins engagé un ressort de contact (122), le nombre de ressorts de contact (122) déterminant la capacité de transport de courant du connecteur à courant fort (1) et le codage étant formé par la profondeur de l'alésage de contact (120),
le premier connecteur à courant fort possédant deux rainures (1200) et deux ressorts de contact (122), et le deuxième connecteur à courant fort (1') possédant seulement une rainure (1200) et seulement un ressort de contact (122), et comportant en outre un premier connecteur enfichable homologue (2), qui possède un boîtier de connecteur enfichable homologue (23) et un contact mâle (22) avec une broche de contact (221), le boîtier de connecteur enfichable homologue (23) possédant un dispositif de verrouillage (233) et possédant en outre une portion d'enfichage (231) dans laquelle fait saillie la broche de contact (221), le premier connecteur enfichable à courant fort (1) ayant une capacité de transport de courant supérieure à celle du deuxième connecteur enfichable à courant fort (1'), l'alésage de contact (120) du premier connecteur enfichable à courant fort (1) étant plus profond que celui (120') du deuxième connecteur enfichable à courant fort (1'), et le premier connecteur enfichable à courant fort (1) pouvant être enfiché et verrouillé avec le premier connecteur enfichable homologue, et le deuxième connecteur enfichable à courant fort (1') ne pouvant pas être enfiché complètement et ne pouvant ainsi pas être verrouillé avec le premier connecteur enfichable homologue (2) en raison de la profondeur plus faible de son alésage de contact (120').

2. Système de connecteurs enfichables selon la revendication 1, la capacité de transport de courant du premier connecteur enfichable homologue (2) correspondant à la capacité de transport de courant du premier connecteur enfichable à courant fort (1).

3. Système de connecteurs selon l'une des revendications 1 à 2, le système de connecteurs possédant en plus un deuxième connecteur enfichable homologue pourvu d'un deuxième boîtier de connecteur enfichable homologue, la broche de contact (221) du deuxième connecteur enfichable homologue faisant saillie moins loin dans la portion d'enfichage du deuxième boîtier de connecteur enfichable homologue que c'est le cas avec le premier connecteur enfichable homologue (2), le deuxième connecteur enfichable homologue pouvant être enfiché et verrouillé aussi bien avec le deuxième connecteur enfichable à courant fort (1') qu'avec le premier connecteur enfichable à courant fort (1), la broche de contact (221) du deuxième connecteur enfichable homologue, à l'état enfiché avec le premier connecteur enfichable à courant fort (1), ne remplissant qu'une partie de l'alésage de contact (120) du premier connecteur enfichable à courant fort (120).

4. Système de connecteurs enfichables selon la revendication 3, la capacité de transport de courant du deuxième connecteur enfichable homologue correspondant à la capacité de transport de courant du deuxième connecteur enfichable à courant fort (1').
